(19) Europäisches Patentamt
European Patent Office
Office européen des brevets

(11) Veröffentlichungsnummer: **0 470 619 A2**

# (12) EUROPÄISCHE PATENTANMELDUNG

(21) Anmeldenummer: **91113341.1**

(51) Int. Cl.5: **G01N 3/60**

(22) Anmeldetag: **08.08.91**

(30) Priorität: **10.08.90 DE 4025348**

(43) Veröffentlichungstag der Anmeldung: **12.02.92 Patentblatt 92/07**

(84) Benannte Vertragsstaaten: **BE DE DK ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Müller, Walter, Dr.**
**Im Stückes 68**
**W-6233 Kelkheim/Ts.(DE)**
Erfinder: **Naumann, Joachim**
**Im Schulzehnten 16**
**W-6233 Kelkheim/Ts.(DE)**
Erfinder: **Preisegger, Ewald**
**Entenstrasse 7**
**W-6085 Nauheim(DE)**
Erfinder: **Schnauber, Martin, Dr.**
**Am Forsthaus 1**
**W-6238 Hofheim/Ts.(DE)**

## (54) Verfahren und Vorrichtung für die Thermoschock-Prüfung.

(57) Die Erfindung betrifft ein Verfahren zur Prüfung von Gegenständen durch Thermoschock in einer geschlossenen Apparatur, bestehend aus folgenden, vorzugsweise sich wiederholenden Schritten:

a) Einführen des zu prüfenden Gegenstandes in die Apparatur,
b) Abkühlen des Gegenstandes durch Eintauchen in ein flüssiges Kaltbad,
c) Trocknung des Gegenstandes über mindestens einer Kältefalle oder in mindestens einem Trockenraum
d) Erhitzen des Gegenstandes durch Eintauchen in ein flüssiges Heißbad,
e) Trocknen des Gegenstandes über mindestens einer Kältefalle oder in mindestens einem Trockenraum,

wobei der Temperaturunterschied zwischen Heiß- und Kaltbad 50 bis 500 °C beträgt, die Temperatur der Kältefalle 5-30 °C niedriger ist als die Temperatur des Kältebades und die Temperatur des Trockenraums 10 bis 50 °C höher ist als die Temperatur des Heißbades, und wobei die Schritte b) bis e) in voneinander abgetrennten, durch verschließbare Öffnungen miteinander verbundenen Teilen der Apparatur durchgeführt werden.

Weiter betrifft die Erfindung eine Vorrichtung zur Prüfung von Gegenständen durch Thermoschock.

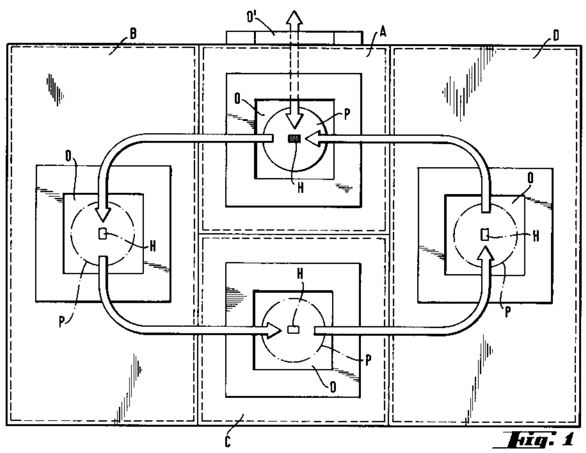

Fig. 1

EP 0 470 619 A2

Die vorliegende Erfindung betrifft ein Verfahren und eine Vorrichtung zur Prüfung von Gegenständen durch Thermoschock in einer geschlossenen Apparatur, wobei der zu prüfende Gegenstand zum Abkühlen in ein flüssiges Kaltbad eingetaucht wird, anschließend eine Kältefalle oder einen Trockenraum passiert, durch Eintauchen in ein flüssiges Heißbad erhitzt wird, anschließend einen Trockenraum oder eine Kältefalle passiert und danach der Thermoschock-Zyklus wiederholt wird.

Bei der Thermoschock-Prüfung wird die Widerstandsfähigkeit von Gegenständen, insbesondere von elektronischen Bauteilen, gegen extreme Temperaturänderungen bestimmt, um z.B. mechanische Schwächen an Materialtrennschichten bei Chips und Kontaktstiften oder um Defekte an Gehäusen von Elektronikartikeln festzustellen. Hierbei werden die Prüflinge abwechselnd hohen und tiefen Temperaturen ausgesetzt. So werden gemäß MIL-STD-883C, Notice 8, Method 1011.8 vom 12.02.1989 (US Government) die Prüflinge jeweils mindestens fünf Minuten lang in ein Kaltbad bei 0 bis -195 °C und anschließend in ein Heißbad bei +100 bis +200 °C abwechselnd 15mal eingetaucht, wobei der Transport vom Heißbad in das Kaltbad und umgekehrt nicht länger als zehn Sekunden dauern soll.

Ein wesentlicher Nachteil ist jedoch, daß durch am Prüfling anhaftende Heißbad- bzw. Kaltbadflüssigkeit sich die Badflüssigkeiten bei den häufigen und schnellen Bäderwechseln der Prüflinge vermischen. Verwendet man für das Heißbad und für das Kaltbad zwei verschiedene Badflüssigkeiten, so kann es durch die Vermischung z.B. zu einem Ausfallen der Heißbadflüssigkeit in der Kaltbadflüssigkeit kommen. Ferner wird die im allgemeinen niedrig siedende Badflüssigkeit, die aus dem Kaltbad mit den Prüflingen und dem Korb in das Heißbad hinübergeschleppt wird, zwangsläufig erhitzt und geht so durch Verdampfung teilweise verloren. Daher ist es im allgemeinen zweckmäßig, die zwei Badflüssigkeiten durch eine einzige Badflüssigkeit mit einem weiten Flüssigkeitsbereich zu ersetzen. Jedoch auch die Verwendung einer einzigen Badflüssigkeit im Kalt- und Heißbad ist nicht problemlos, da die Kaltbadflüssigkeit aufgrund ihrer höheren Viskosität beim Transport der Prüflinge im Korb in das Heißbad hinübergeschleppt werden kann, was wiederum zur Niveauabsenkung im Kaltbad und zum Überlaufen des Heißbades führen kann. Außerdem verringert sich der Wärmeübergang im Kaltbad, je höher die Viskosität der Kaltbadflüssigkeit ist, so daß die erforderliche Temperatur im Kaltbad über eine längere Betriebszeit nicht aufrechterhalten werden kann.

Der Erfindung liegt nun die Aufgabe zugrunde, ein Verfahren und eine Vorrichtung zur Thermoschockprüfung zu finden, derart daß ein Vermischen von Heiß- und Kaltbadflüssigkeit im wesentlichen vermieden wird.

Es wurde nun gefunden, daß durch den Einbau von Wärmetauschern zwischen Kaltbad und Heißbad diese Vermischung im wesentlichen verhindert wird.

Ferner wurde gefunden, daß die Strömungsgeschwindigkeit und folglich der Wärmeübergang im Kaltbad, insbesondere bei hochviskosen Kaltbadflüssigkeiten mit einer kinematischen Viskosität von im allgemeinen über 150 $mm^2/s$, durch das Einleiten von gasförmigem Stickstoff in die Badflüssigkeit erhöht werden kann. Der gasförmige Stickstoff bildet außerdem eine Inertgassperre für die Dämpfe aus dem Heißbad und verdrängt außerdem Wasserdampf aus dem System. Dadurch wird verhindert, daß sich Wasserdampf auf den Prüflingen und im Kaltbad kondensiert.

Ferner wurde gefunden, daß das dadurch im allgemeinen mit Kaltbaddämpfen angereicherte Stickstoffgas durch Waschen mit flüssigem Stickstoff im Gegenstrom über eine Rieselkolonne im wesentlichen von den Kaltbaddämpfen gereinigt werden kann und daß die Temperatur des Kaltbades über die Dosierung des flüssigen Stickstoffs, der über die Rieselkolonne in die Kaltbadflüssigkeit eingeleitet wird, gesteuert werden kann.

Ferner wurde gefunden, daß sich die lokale Umwälzgeschwindigkeit der Badflüssigkeit dadurch erhöhen läßt, indem man den zu prüfenden Gegenstand in eine Rohrschlaufe als Badgefäß einführt, in der die Badflüssigkeit zirkuliert.

Ein Gegenstand der Erfindung ist ein Verfahren zur Prüfung von Gegenständen durch Thermoschock in einer geschlossenen Apparatur, bestehend aus folgenden Schritten:

a) Einführen des zu prüfenden Gegenstandes in die Apparatur durch eine verschließbare Öffnung,

b) Abkühlen des Gegenstandes durch Eintauchen in ein flüssiges Kaltbad,

c) Trocknen des Gegenstandes über mindestens einer Kältefalle oder in mindestens einem Trockenraum

d) Erhitzen des Gegenstandes durch Eintauchen in ein flüssiges Heißbad,

e) Trocknen des Gegenstandes über mindestens einer Kältefalle oder in mindestens einem Trockenraum,

wobei der Temperaturunterschied zwischen Heiß- und Kaltbad 50 bis 500 K beträgt, die Temperatur der Kältefalle 5-30 K niedriger ist als die Temperatur des Kältebades und die Temperatur des Trockenraums 10 bis 50 K höher ist als die Temperatur des Heißbades, und wobei die Schritte b) bis e) in voneinander abgetrennten, durch verschließbare Öffnungen miteinander verbundenen Teilen der Apparatur durchgeführt werden.

Die in Schritt e) benutzte Kältefalle oder der Trockenraum können dieselben wie in Schritt c) sein oder andere. Die Schritte b) bis e) werden mehrfach wiederholt. Daher kann man auch genausogut den Zyklus mit Schritt d) statt mit Schritt b) beginnen.

Vorzugsweise wird der zu prüfende Gegenstand durch Eintauchen in ein flüssiges Kaltbad abgekühlt, über einer Kältefalle getrocknet, durch Eintauchen in ein flüssiges Heißbad erhitzt und von dort für weitere Thermoschock-Zyklen über einen Trockenraum erneut zum Kaltbad transportiert. Mit anderen Worten, man benutzt vorzugsweise im Schritt c) eine Kältefalle und in Schritt e) einen Trockenraum.

Der Temperaturunterschied zwischen Heiß- und Kaltbad ist vorzugsweise 100 bis 350 K, insbesondere 150 bis 250 K. Falls eine oder zwei Kältefallen benutzt werden, ist deren Temperatur im allgemeinen 5 bis 30 K niedriger als die Temperatur des vorhergehenden Bades. Falls eine oder zwei Trockenräume benutzt werden, ist deren Temperatur vorzugsweise 10 bis 20 K höher als die Siedetemperatur des vorhergehenden Bades. Die Flüssigkeiten des Heißbades und des Kaltbades können hierbei gleich oder verschieden sein.

In einer besonderen Ausführungsform, die sich insbesondere für die Verwendung einer Flüssigkeit für beide Bäder eignet, wird in die Kaltbadflüssigkeit gasförmiger und/oder flüssiger Stickstoff eingeleitet. Vorzugsweise wird beides verwendet und der gasförmige Stickstoff direkt in die Kaltbadflüssigkeit eingeleitet, während der flüssige Stickstoff im Gegenstrom zum gasförmigen Stickstoff über eine Rieselkolonne in die Kaltbadflüssigkeit eingeleitet wird, wobei im allgemeinen über die Dosierung des flüssigen Stickstoffs die Temperatur des Kaltbades gesteuert wird.

In einer weiteren Ausführungsform, die sich ebenfalls für die Verwendung einer Flüssigkeit für beide Bäder eignet, ist mindestens eines der beiden Badgefäße als Rohrschlaufe ausgebildet, in der die Badflüssigkeit zirkuliert.

Ein weiterer Gegenstand der Erfindung ist eine Vorrichtung zur Prüfung von Gegenständen durch Thermoschock in einer geschlossenen Apparatur, bestehend aus

einem 1. Raum mit einem Kaltbad und einer Vorrichtung zu dessen Kühlung,

einem 2. Raum mit einem Heißbad und einer Vorrichtung zu dessen Heizung,

einem Wärmetauscher-Bereich, enthaltend mindestens einen mit einer Heizvorrichtung versehenen Trokkenraum und/oder mindestens einen mit einer Kältefalle und einer Kühlvorrichtung für diese versehenen Raum, wobei der 1. Raum und der 2. Raum über den Wärmetauscher-Bereich mittels verschließbarer Öffnungen verbunden sind und

einer Vorrichtung zum Transport der zu prüfenden Gegenstände vom 1. Raum über den Wärmetauscher-Bereich zum 2. Raum oder in umgekehrter Richtung, einschließlich einer oder mehrerer verschließbarer Öffnungen an der Außenwand der Apparatur zum Be- und Entladen der Transportvorrichtung mit den zu prüfenden Gegenständen.

Die erfindungsgemäße Vorrichtung wird im folgenden auch als Vorrichtung 1 bezeichnet.

Der Wärmetauscher-Bereich kann (Fig. 4), aber muß nicht, aus einem einzigen zusammenhängenden Raumgebiet bestehen. Wenn er nur einen Trockenraum, aber keinen Raum mit Kältefalle enthält, oder nur einen Raum mit Kältefalle, aber keinen Trockenraum, dann besteht er natürlich aus einem einzigen Raumgebiet. Aber wenn der Wärmetauscher-Bereich beide Arten von Räumen enthält, dann können diese direkt nebeneinander liegen und lediglich durch eine Wand getrennt sein, oder sie können weiter voneinander entfernt sein, also zwei getrennte Raumgebiete besetzen.

Vorzugsweise wird, falls eine Kältefalle benutzt wird, zur Kühlung des Kaltbades und der Kältefalle eine zweistufige Kompressionskälteanlage verwendet, wobei das Kaltbad mit der ersten Verdampferstufe im höheren Temperaturniveau und die Kältefalle mit der zweiten Verdampferstufe im niedrigeren Temperaturniveau gekühlt wird.

Eine weitere spezielle Ausführungsform der Vorrichtung 1 benutzt für das Kaltbad ein Gefäß mit einem doppelten Boden, dessen oberer Boden vorzugsweise als Siebplatte konstruiert ist. Durch diese Siebplatte strömt das zwischen den beiden Böden eingeleitete Stickstoffgas in fein verteilter Form in die Kaltbadflüssigkeit. Der Einbau eines zusätzlichen Rührwerkes kann bei dieser Ausführungsform im allgemeinen entfallen.

Eine weitere spezielle Ausführungsform der Vorrichtung 1 besitzt als Kalt- und/oder als Heißbad eine Rohrschlaufe mit einer zirkulierenden Badflüssigkeit.

Die mit der Erfindung erzielten Vorteile bestehen insbesondere darin, daß die Heißbad- und die Kaltbadflüssigkeit im wesentlichen nicht miteinander vermischt werden. Durch die beiden letzteren speziellen Ausführungsformen wird im Kaltbad ein besonders guter Wärmeübergang erzielt. Sie sollen daher vorzugsweise bei Verwendung einer Flüssigkeit für beide Bäder angewendet werden.

Kurze Beschreibungen der Zeichnungen:

Fig. 1 ist eine schematische Grundrißzeichnung der erfindungsgemäßen Vorrichtung 1 zur Thermoschock-Prüfung

Fig. 2 ist eine schematische Seitenansicht des Kaltbades mit doppeltem Boden, Rieselkolonne und Aktivkohlefilter.

Fig. 3 ist eine schematische Seitenansicht eines als Rohrschlaufe ausgebildeten Badgefäßes.

Fig. 4 ist eine schematische Grundrißzeichnung der Vorrichtung 1 in einer Form mit einer Kältefalle, aber ohne Trockenraum.

Die vorliegende Erfindung ist vor allem für die Prüfung der thermischen Widerstandsfähigkeit von elektronischen Bauteilen geeignet. Sie ist aber weiterhin auf jeden beliebigen Gegenstand anwendbar, dessen thermische Widerstandsfähigkeit nach dem Thermoschock-Verfahren geprüft werden soll. Die folgende Beschreibung soll exemplarisch einen Verfahrensweg und eine Ausgestaltung der erfindungsgemäßen Vorrichtung zur Prüfung von elektronischen Bauteilen zeigen. In Fig. 1 ist die Vorrichtung 1 und ein entsprechender Verfahrensweg schematisch dargestellt. Dabei besteht der Wärmetauscherbereich aus zwei getrennten Raumgebieten: dem Kältefallenraum und dem Trockenraum. (Es sind aber auch wie bereits oben erwähnt, Ausgestaltungen möglich, bei denen diese beiden Räume direkt nebeneinander liegen und so ein einziges zusammenhängendes Raumgebiet einnehmen, das nur durch eine Wand in zwei Räume geteilt wird).

In der Vorrichtung 1 (Fig. 1) sind ein Trockenraum (A), Kaltbadraum (B), Kältefallenraum (C) und Heißbadraum (D) derart angeordnet, daß einerseits der Trockenraum (A) und der Kältefallenraum (C) und andererseits der Kaltbadraum (B) und der Heißbadraum (D) einander gegenüber liegen. Der Kaltbadraum (B) ist über verschließbare Öffnungen (0) mit dem Trockenraum (A) und mit dem Kältefallenraum (C) verbunden, und der Heißbadraum (D) ist ebenso über verschließbare Öffnungen (0) mit dem Trockenraum (A) und mit dem Kältefallenraum (C) verbunden. Darüberhinaus ist der Trockenraum (A) über eine verschließbare Öffnung (O') von außen zugänglich, um den Korb (P) mit den Prüflingen be- und entladen zu können. Die verschließbaren Öffnungen (O) und (O') Prüflinge in die verschiedenen Räume (A, B, C und D) kurzzeitig nach Bedarf geöffnet, so daß während des Verfahrens die einzelnen Räume (A, B, C und D) nach außen und gegeneinander abgeschlossen sind.

Im allgemeinen handelt es sich bei den verschließbaren Öffnungen (O) um Irisblenden, die jeweils an der Decke der einzelnen Räume (A, B, C und D) angebracht sind. Die Prüflinge werden im allgemeinen an einer Haltevorrichtung (H) in Körben transportiert und durch die kurzzeitig geöffneten Irisblenden von oben in die einzelnen Räume (A, B, C und D) eingeführt. Im allgemeinen besteht die Haltevorrichtung aus einem oder mehreren vertikal und kreisförmig horizontal beweglichen Armen, an denen die Körbe hängen. Als Hebe-/Senk- und Drehmechanismus der Arme wird eine dem Fachmann bekannte übliche Vorrichtung verwendet, bestehend beispielsweise aus einer Hydraulik und einem Motor. Dadurch können die Körbe oberhalb der Räume A, B, C und D durch den Drehmechanismus transportiert und durch den Hebe-/Senkmechanismus von oben in die einzelnen Räume eingeführt und herausgehoben werden.

Vorzugsweise werden die Körbe, welche im allgemeinen oben mit einem Deckel verschlossen sind, von oben durch ein bis in die Badflüssigkeit reichendes Rohr (Z in,Fig. 2) in das jeweilige Bad eingeführt. Die Körbe haben im allgemeinen zusätzlich am oberen Rand eine Dichtungslippe (L in Fig. 2), die den Zwischenraum zwischen Korb und Rohr abdichtet.

Der Trockenraum (A) wird im allgemeinen durch mehrere, insbesondere durch zwei gegenüberliegende Heizplatten und mit einem Gebläse beheizt, so daß sich der Korb mit den Prüflingen zur Trocknung im allgemeinen zwischen den beiden Heizplatten befindet. Im oberen Teil des Trockenraumes ist im allgemeinen ein Wasserkühler angebracht, an dem die zunächst an den Prüflingen und dem Korb haftende und dann im Trockenraum verdampfte Heißbadflüssigkeit kondensiert und dann über eine Rohrverbindung in das Heißbad zurückgeleitet werden kann.

Durch diese Rückführung von ausgetragener Heißbadflüssigkeit kann ein Verlust an Badflüssigkeit während der Thermoschock-Prüfung im wesentlichen vermieden werden. Die Temperatur des Trockenraumes ist im allgemeinen 10 bis 50 °C, insbesondere 10 bis 20 °C höher als die Temperatur des Heißbades.

Nach Öffnen der Irisblende wird der Korb mit den Prüflingen von Trockenraum (A) in den angrenzenden Kaltbad-Raum (B) transportiert (Fig. 1). Die Irisblenden werden wieder geschlossen und der Korb (P) mit den Prüflingen mittels der Haltevorrichtung in die Kaltbadflüssigkeit vollständig eingetaucht. Im allgemeinen verbleiben die Prüflinge mindestens fünf Minuten in der Kaltbadflüssigkeit. Das Kaltbad wird im allgemeinen mit der ersten Verdampferstufe einer zweistufigen Kompressionskälteanlage gekühlt. Mit der zweiten Verdampferstufe wird die zum Kaltbadraum benachbarte Kältefalle im Kältefallenraum (C) gekühlt. Dadurch wird erreicht, daß die Temperatur der Kältefalle 5 bis 30 K, insbesondere 5 bis 10 K niedriger ist als die Temperatur des Kaltbades. Nach dem Abkühlen der Prüflinge im Kaltbad werden diese in dem Korb an der Haltevorrichtung wieder aus der Kaltbadflüssigkeit gezogen und nach dem Öffnen der Irisblenden vom Kaltbadraum (B) in den Kältefallenraum (C) transportiert (Fig. 1). Danach werden die Irisblenden wieder geschlossen. Im Kältefallenraum (C) verdunstet die im allgemeinen als Kaltbadflüssigkeit benutzte leicht

flüchtige Verbindung, die noch an den Prüflingen und der Haltevorrichtung einschließlich dem Korb haftet, und kondensiert in der Kältefalle. Am Boden der Kältefalle wird die kondensierte Kaltbadflüssigkeit gesammelt und über eine Rohrverbindung im allgemeinen mittels einer Pumpe in das Kaltbad zurückgepumpt. Durch die Rückführung von ausgetragener Kaltbadflüssigkeit wird ein Verlust an Badflüssigkeit während der Thermoschock-Prüfung weitgehend vermieden.

Anschließend wird nach Öffnen der Irisblenden von Kältefallenraum (C) und Heißbad-Raum (D) der Korb mit den Prüflingen in den Heißbadraum (D) transportiert (Fig. 1). Die Irisblende wird wieder geschlossen und der Korb mit den Prüflingen mittels der Haltevorrichtung in die Heißbadflüssigkeit vollständig eingetaucht.

Im allgemeinen verbleiben die Prüflinge mindestens fünf Minuten im Heißbad. Das Heißbad wird im allgemeinen mit einer Heizplatte beheizt. Nach dem Erhitzen der Prüflinge werden diese in dem Korb an der Haltevorrichtung wieder aus der Heißbadflüssigkeit gezogen und nach Öffnen der Irisblende vom Heißbadraum (D) in den Trockenraum (A) transportiert (Fig. 1). Danach werden die Irisblenden wieder geschlossen.

Der Wechsel der Prüflinge vom Kaltbad in das Heißbad und umgekehrt - über die Kältefalle bzw. den Trockenraum - soll im allgemeinen jeweils höchstens ca. 10 Sekunden dauern. Ferner werden bei dem erfindungsgemäßen Verfahren vorzugsweise zwei Körbe mit Prüflingen verwendet, die an gegenüberliegenden Enden der Haltevorrichtung befestigt sind und von denen der eine in das Kaltbad und gleichzeitig der andere in das Heißbad eintaucht. Für den Bäderwechsel der Prüflinge werden die jeweils dafür notwendigen Irisblenden geöffnet und nach dem Wechsel wieder geschlossen. Auf diese Weise wird erreicht, daß sich die Prüflinge im wesentlichen in einem geschlossenen Raum befinden.

Durch die erfindungsgemäße Anordnung und Verwendung von Kältefalle und Trockenraum wird gewährleistet, daß sich die zwei Badflüssigkeiten im wesentlichen nicht vermischen. Mit der zusätzlichen Verwendung der bevorzugten Ausführungsformen des Kaltbades gemäß Fig. 2 und 3 wird gewährleistet, daß insbesondere bei einer einzigen Testflüssigkeit für beide Bäder die Temperatur des Kaltbades aufgrund des verbesserten Wärmeüberganges auch über eine längere Betriebszeit aufrechterhalten wird.

Alternativ dazu können die Ausführungsformen des Kaltbades gemäß Fig. 2 und 3 für die Thermoschockprüfung ohne Verwendung von Kältefalle und Trockenraum nur mit dem Heißbad kombiniert werden.

Die Temperatur des Kaltbades liegt im allgemeinen bei 0 bis -195 °C, vorzugsweise bei -40 bis -100 °C, insbesondere bei -55 bis -65 °C. Die Temperatur des Heißbades liegt im allgemeinen bei 0 bis 500 °C, vorzugsweise bei 0 bis 300 °C, insbesondere bei 0 bis 200 °C. Dabei ist der eben genannte Temperaturunterschied einzuhalten.

Im allgemeinen besitzen die Kaltbadflüssigkeiten jedoch eine relativ hohe Viskosität. So verringert sich die Fließfähigkeit der Badflüssigkeit ab einer kinematischen Viskosität von etwa 150 $mm^2/s$ so weit, daß infolge der geringen Umwälzgeschwindigkeit der Badflüssigkeit die Temperatur im Kaltbad allmählich ansteigt.

Als Badflüssigkeiten haben sich perfluorierte organische Verbindungen wegen ihres inerten chemischen Verhaltens gegenüber Werkstoffen, wegen ihrer guten thermischen Stabilität und wegen ihrer relativ hohen Flüchtigkeit bewährt. Vorzugsweise werden folgende perfluorierte organische Verbindungen eingesetzt:

1. Geradkettige oder verzweigte Perfluoralkane der Formel $C_iF_{2i+2}$, wobei i eine ganze Zahl von 5 bis 20 ist. Die Herstellung der Perfluoralkane ist z.B. in DE-OS 2 332 097 und in EP-A-0 286 131 beschrieben.

Im allgemeinen besitzen die Perfluoralkane einen niedrigen Siedepunkt und eine geringe kinematische Viskosität (kleiner als 2 $mm^2/s$ bei 20 °C) und eignen sich daher bevorzugt als Kaltbadflüssigkeiten, beispielsweise Perfluorpentan $C_5F_{12}$ mit einem Siedepunkt von 30 °C, Perfluorhexan $C_6F_{14}$ mit einem Siedepunkt von 56 °C, Perfluor-2-methylpentan $C_6F_{14}$ mit einem Siedepunkt von 58 °C, Perfluoroctan $C_8F_{18}$ mit einem Siedepunkt von 102 °C, Perfluor-2,3,4-trimethylpentan $C_8F_{18}$ mit einem Siedepunkt von 115 °C,
Perfluor-2,4-dimethyl-3-ethylpentan $C_9F_{20}$ mit einem Siedepunkt von 121 °C.

2. Cyclische oder substituierte cyclische Perfluoralkane mit einer Kohlenstoffzahl von 10 bis 20, z.B. Perfluordekalin, Perfluorbutyldekalin, Perfluorperhydrophenanthren und Perfluorperhydrobenzanthren. Ihre Herstellung wird z.B. in DE-OS 2 000 830, US-PS 4 777 304, EP-A-0 253 529, EP-A-0 190 393 sowie in "Tetrahedron", 19, 1893 (1963) beschrieben.

Die cyclischen und substituierten cyclischen Perfluoralkane besitzen im allgemeinen einen hohen Siedepunkt und eine höhere kinematische Viskosität (größer als 8 $mm^2/s$ bei 20 °C) als die nichtcyclischen Perfluoralkane und eignen sich daher insbesondere als Heißbadflüssigkeiten, beispielsweise Perfluortetradecahydrophenanthren $C_{14}F_{24}$ mit einem Siedepunkt von 215 °C
Perfluorbutyldecalin $C_{14}F_{26}$, ein Isomerengemisch mit einem Siedebereich zwischen 210 und 216 °C,
Perfluorperhydrobenzanthren-Isomerengemisch $C_{17}F_{28}$ mit einem Siedebereich zwischen 259,5 und 263,5 °C

3. Perfluorpolyether der Formel (I)

$$R^1-(O-\overset{CF_3}{\overset{|}{C}}F-CF_2)_m-O-\underset{CF_3}{\underset{|}{C}}F-\overset{CF_3}{\overset{|}{C}}F-O-(CF_2-\overset{CF_3}{\overset{|}{C}}F-O)_n-R^2 \qquad (I)$$

worin bedeuten:

$R^1$, $R^2$ gleich oder voneinander verschieden F oder $C_aF_{2a+1}$, wobei a eine ganze Zahl von 1 bis 10 ist, und

m, n ganze Zahlen von 0 bis 12 mit $1 \leqq n+m \leqq 15$ oder

Perfluorpolyether der Formel (II)

$$R^3-O-(A)-(B)-(C)-R^4 \qquad (II),$$

worin bedeuten:

$R^3$, $R^4$ gleich oder voneinander verschieden $C_bF_{2b+1}$, wobei b eine ganze Zahl von 1 bis 4 ist,

(A), (B) und (C) verschieden voneinander eine Gruppe der Formel

$$-(\underset{CF_3}{\underset{|}{C}}F-CF_2-O)_d- \quad , \quad -(C_2F_4-O)_e-$$

oder

$$-(\underset{R^5}{\underset{|}{C}}F-O)_f-$$

mit

$R^5$ = F oder $CF_3$,

d eine ganze Zahl von 1 bis 7 und

e, f gleich oder voneinander verschieden eine ganze Zahl von 0 bis 7.

Die Herstellung von Perfluorpolyethern der Formel (I) und (II) ist z.B. in US-PS 3 665 041, US-PS 3 985 810 und in JP-OS Sho 58-103 334 beschrieben.

Im allgemeinen haben die Perfluorpolyether der Formel (I) und (II) einen Siedepunkt über ca. 130 °C und eignen sich daher bevorzugt als Heißbadflüssigkeiten, insbesondere wenn der Siedepunkt über ca. 170 °C liegt, beispielsweise folgende Verbindungen der Formel (I) Perfluor-5,6,9-trimethyl-4,7,10-trioxatridekan mit einem Siedepunkt von 175 °C (®Hostinert 175), Perfluor-5,8,9,12-tetramethyl-4,7,10,13-tetraoxahexadekan mit einem Siedepunkt von 216 °C (®Hostinert 216), Perfluor-5,8,9,12,15-pentamethyl-4,7,10,13,16-pentaoxanonadekan mit einem Siedepunkt von 245 °C (®Hostinert 245), Perfluor-5,8,11,12,15,18-hexamethyl-4,7,10,13,16,19-hexaoxadocosan mit einem Siedepunkt von 272 °C (®Hostinert 272), Perfluor-5,8,11,14,15,18,21,24-octamethyl-4,7,10,13,16,19, 22,25-octaoxaoctacosan mit einem Siedepunkt von 316 °C (®Hostinert 316),
oder ein Gemisch aus Perfluorpolyethern nach Formel (II), in deren Strukturformeln $R^3$ und $R^4$ = $CF_3$, d etwa 40, d:f = 5:1 bis 20:1 und e = 0 ist, mit einem Siedepunkt von ca. 215 °C.

Im allgemeinen liegt die kinematische Viskosität der Perfluorpolyether nach Formel (I) oder (II) über 2 $mm^2/s$ bei 20 °C und nimmt mit steigendem Siedepunkt der Verbindungen zu. Beim Einsatz als Heißbadflüssigkeiten hat diese relativ hohe Viskosität jedoch im allgemeinen keine große Bedeutung, weil die hohe Badtemperatur die Viskosität der Flüssigkeit wieder herabsetzt.

Besonders bevorzugte Heißbadflüssigkeiten sind Perfluorpolyether der Formel (I) vom ®Hostinert-Typ, da die ®Hostinert-Typen bis ca. 350 °C eine hohe thermische Stabilität zeigen.

Perfluorpolyether der Formel (I) können aber auch als Kaltbadflüssigkeiten verwendet werden, wie beispielsweise Perfluor-5,6-dimethyl-4,7-dioxadecan (®Hostinert 130).

Perfluorierte Amine der Formel

$R^6R^7R^8N$,

worin

$R^6$ bis $R^8$ gleich oder voneinander verschieden eine Gruppe der Formel $C_gF_{2g+1}$ bedeuten, wobei g eine ganze Zahl von 1 bis 14 ist

Die Herstellung der perfluorierten Amine ist z.B. in US-PS 2 616 927, DE-OS 3 804 473 und in EP-A-0 271 272 beschrieben.

Die Triperfluoralkylamine der Formel $C_5F_{11}N(C_2F_5)_2$ (Siedepunkt 215 °C) und $C_{10}F_{21}N(C_2F_5)_2$ - (Siedepunkt 238 °C) eignen sich vorzugsweise als Heißbadflüssigkeiten bei Temperaturen oberhalb von ca. 200 °C, da ihre kinematische Viskosität über 10 $mm^2/s$ (Raumtemperatur) beträgt.

5. Perfluoraminoether der Formel

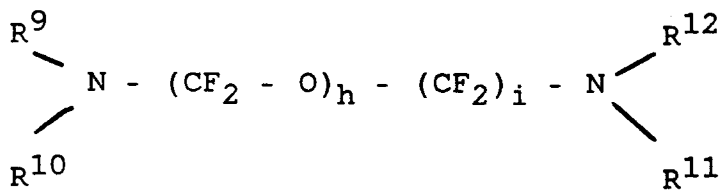

worin bedeuten:

$R^9$ bis $R^{12}$ gleich oder voneinander verschieden eine Gruppe der Formel $C_gF_{2g+1}$, wobei g eine ganze Zahl von 1 bis 14 ist,

h, i gleich oder voneinander verschieden eine ganze Zahl von 1 bis 6.

Die Herstellung der Perfluoraminoether ist z.B. in EP-A 0 214 852 beschrieben. Insbesondere eignen sich die Perfluoraminoether als Heißbadflüssigkeiten, beispielsweise

$(C_2F_5)_2NCF_2CF_2OCF_2CF_2N(C_3F_7)_2$ mit einem Siedepunkt zwischen 195 und 200 °C,
$(C_2F_5)_2NCF_2CF_2OCF_2CF_2N(C_4F_9)_2$ mit einem Siedebereich zwischen 215 und 230 °C,
$(C_3F_7)_2NCF_2CF_2OCF_2CF_2N(C_3F_7)_2$ mit einem Siedebereich zwischen 225-240 °C,
$(C_3F_7)_2N(CF_2)_4O(CF_2)_4N(C_3F_7)_2$ mit einem Siedebereich zwischen 240 und 260 °C und
$(C_3F_7)_2N(CF_2)_3O(CF_2)_3N(C_3F_7)_2$ mit einem Siedebereich zwischen 240 und 265 °C.

Entscheidend für die Thermoschock-Prüfung ist nicht nur die absolute Temperatur des Kalt- bzw. Heißbades, sondern auch der relative Temperaturunterschied von Kalt- und Heißbad. Im allgemeinen ist die Thermoschock-Prüfung um so aufschlußreicher, je größer der Temperaturunterschied zwischen Kaltbad und Heißbad ist. Mit der erfindungsgemäßen Thermoschock-Prüfung können unter Verwendung der oben angeführten perfluorierten Verbindungen als Badflüssigkeiten besonders große Temperaturunterschiede von z.B. mehr als 200 °C erreicht werden und ohne wesentliche Vermischungen der zwei Badflüssigkeiten während der gesamten Laufzeit der Thermoschock-Prüfung ohne Betriebsstörungen aufrechterhalten werden.

Bei Verwendung von zwei Flüssigkeiten wird man für das Kaltbad wegen des besseren Wärmeüberganges eine Flüssigkeit mit einer möglichst niedrigen Viskosität auswählen. Das ist bei Verwendung einer einzigen Flüssigkeit für beide Bäder kaum möglich, weil die Auswahl der Flüssigkeit wegen der hohen Temperatur im Heißbad von ihrem Siedepunkt bestimmt wird. In diesem Falle muß der Wärmeübergang durch andere, im folgenden beschriebenen Maßnahmen verbessert werden. Denn bei Kaltbadflüssigkeiten mit einer kinematischen Viskosität, die unterhalb von -50 °C über 150 $mm^2/s$ liegt, ist die Kühlwirkung des Kaltbades im allgemeinen schlechter als bei weniger viskosen Badflüssigkeiten. Daher wird zur Erhöhung der Kühlwirkung bei der besonderen Ausführungsform gemäß Fig. 2 zusätzlich kalter gasförmiger Stickstoff in die Kaltbadflüssigkeit eingeleitet. Im allgemeinen besitzt das Kaltbadgefäß einen doppelten Boden, dessen oberer Boden vorzugsweise als Siebplatte (S) konstruiert (Fig. 2) ist. Durch diese Siebplatte strömt das zwischen den Böden eingeleitete Stickstoffgas (2) in fein verteilter Form in die Kaltbadflüssigkeit. Vorzugsweise ist der Stickstoffgasstrom so stark, daß eine turbulente Strömung in der Badflüssigkeit entsteht, die zu einer im wesentlichen gleichmäßigen Temperaturverteilung innerhalb des Kaltbades führt und so eine im wesentlichen gleichbleibende Kühlwirkung des Kaltbades während der Thermoschock-Prüfung gewährleistet. Der Einbau eines zusätzlichen Rührwerkes kann bei dieser Ausführungsform im allgemeinen entfallen.

Im allgemeinen ist das Stickstoffgas nach Austritt aus dem Kaltbad mit Badflüssigkeit angereichert. Vorzugsweise wird daher dieser Stickstoffgasstrom durch eine Rieselkolonne (R) geleitet, durch die im Gegenstrom flüssiger Stickstoff (1) fließt. Die Badflüssigkeit wird dadurch im wesentlichen aus dem

Stickstoffgasstrom ausgewaschen. Eventuell noch vorhandene Dämpfe können an einem Aktivkohlefilter (AK), welcher der Rieselkolonne nachgeschaltet ist, adsorbiert werden. Der Aktivkohlefilter läßt sich z.B. durch Wasserdampf regenerieren und die adsorbierte Badflüssigkeit kann dabei nach allgemein bekannten Methoden wiedergewonnen werden.

Nach Passieren der Rieselkolonne wird der flüssige Stickstoff in die Kaltbadflüssigkeit eingeleitet. Durch eine entsprechend gewählte Dosierung des flüssigen Stickstoffs kann die Badflüssigkeit auf der erforderlichen Temperatur während der gesamten Betriebszeit der Thermoschock-Prüfung gehalten werden. Dadurch kann im allgemeinen auf eine zusätzliche Kühlung des Kaltbades verzichtet werden. Bei der besonderen Ausführungsform gemäß Fig. 3 wird der Wärmeübergang auf folgende Weise verbessert:

Zur Erhöhung der lokalen Umwälzgeschwindigkeit an den Prüflingen werden die Prüflinge in eine Rohrschlaufe als Kaltbad- bzw. Heißbad-Raum eingeführt, in der die entsprechende Badflüssigkeit zirkuliert (Fig. 3). Die geometrischen Parameter der Rohrschlaufe sind, z.B. wie in Fig. 3: E = 630 mm, F = 150 mm, G = 100 mm und I = 500 mm. Im allgemeinen werden die Prüflinge in einem kreiszylindrischen Korb durch eine verschließbare Öffnung (K) in die Rohrschlaufe eingeführt. Die Badflüssigkeit wird im allgemeinen durch eine Propellerpumpe oder durch einen Propellerrührer (Pr) umgewälzt. Wegen der Verringerung des freien Querschnitts der Rohrschlaufe durch die Prüflinge und die Haltevorrichtung wird eine höhere lokale Umwälzgeschwindigkeit erreicht. Die Kühlung bzw. Erwärmung der Badflüssigkeit wird, wie weiter vorne in der Beschreibung erklärt, durchgeführt.

Zur weiteren Erhöhung der lokalen Umwälzgeschwindigkeit kann der Spalt (Sp) zwischen Rohrschlaufe und Korb geschlossen werden. Dadurch strömt die Badflüssigkeit mit erhöhter Geschwindigkeit im wesentlichen durch den Korb direkt an den Prüflingen vorbei. Dadurch wird ein besonders intensiver Wärmeübergang zwischen den Prüflingen und der Kaltbadflüssigkeit bzw. der Heißbadflüssigkeit erreicht. Bei Verwendung einer einzigen Flüssigkeit für beide Bäder genügt es, eine der beiden besonderen Ausführungsformen des Kaltbades zu verwenden. Da in diesem Fall keine Vermischung von zwei verschiedenen Flüssigkeiten möglich ist, kann der Einbau von Wärmetauschern entfallen. Dadurch wird der Aufbau einer solchen Thermoschockanlage vereinfacht und die Kosten für deren Herstellung reduziert.

## BEISPIELE

### Beispiel 1

In einer in Fig. 4 schematisch dargestellten Apparatur, welche der Vorrichtung 1 in einer Ausgestaltung mit einer Kältefalle, aber ohne Trockenraum entspricht, wurde folgender Versuch gemäß der Beschreibung der Vorrichtung 1 durchgeführt. Für das Heißbad wurde eine perfluorierte Verbindung, ®Hostinert 272, mit einem Siedepunkt von 272 °C verwendet. Die Temperatur des Heißbades betrug +250 °C. Für das Kaltbad wurde eine perfluorierte Verbindung, ®Hostinert 130 mit einem Siedepunkt von +130 °C verwendet. Die Temperatur des Kaltbades betrug -65 °C. Die Kaltbadflüssigkeit hatte bei dieser Temperatur eine kinematische Viskosität von 38 $mm^2/s$. Die Temperatur der Kältefalle betrug 75 °C. Beide Körbe wurden mit elektronischen Bauteilen beladen und zwar Keramikplatten mit vergoldeten Stiften und aufgeklebten Chips. Pro Test wurden 15 Zyklen durchgeführt. In einem Zyklus verweilten die Körbe mit den Bauteilen jeweils 5 Minuten im Heiß- bzw. Kaltbad. Der Bäderwechsel der Körbe dauerte ca. 10 Sekunden. Die Dauer eines Tests einschließlich Be- und Entladen betrug 2 Stunden und 37 Minuten. Insgesamt wurden nacheinander 27 Tests zu 15 Zyklen durchgeführt. Die Betriebszeit betrug demnach 70 Stunden und 44 Minuten. Danach wurde die Zusammensetzung des Heiß- und Kaltbades sowie des Kondensats im Sammelbehälter des Kältefallen-Raums (C) gaschromatographisch analysiert. Es wurden folgende Zusammensetzungen gefunden:

| | |
|---|---|
| im Heißbad | 97,0 Flächen-% der Heißbadflüssigkeit |
| | 3,0 Flächen-% der Kaltbadflüssigkeit |
| im Kaltbad | 100,0 Flächen-% der Kaltbadflüssigkeit |

im Kondensat des Sammelbehälters der Kältefalle
96,7 Flächen-% der Kaltbadflüssigkeit
3,2 Flächen-% der Heißbadflüssigkeit

Die Kaltbadflüssigkeit blieb also während des über 70 Stunden dauernden Betriebs unverändert, während in das Heißbad eine geringe Menge an Kaltbadflüssigkeit eingetragen wurde. Diese geringe Menge wäre jedoch bei Fortsetzung des Versuchs weitgehend in der Kältefalle auskondensiert worden. Man kann also davon ausgehen, daß auch die Flüssigphase des Heißbades während des Betriebes keine Kaltbadflüssigkeit enthält, weil deren Siedepunkt weit unter der Temperatur im Heißbad liegen soll. Bei diesem Beispiel betrug die Temperaturdifferenz 120 K. Zur quantitativen Bestimmung der Heißbaddämpfe wurden bei

diesem Versuch die Heißbaddämpfe nicht als Kondensat in das Heißbad zurückgeleitet, sondern sie wurden weitgehend in der Kältefalle kondensiert. Infolge des geschlossenen Systems traten während des Versuches insgesamt keine wesentlichen Verluste der beiden Badflüssigkeiten auf.

**Beispiel 2**

Diese Versuchsreihe, durchgeführt in einem Kaltbad nach Fig. 2, untersucht den Einfluß von gasförmigem und flüssigem Stickstoff auf die Kaltbadflüssigkeit. Als Kaltbadflüssigkeit wurde die perfluorierte Verbindung ®Hostinert 130 mit einem Siedepunkt von 130 °C verwendet. Bei dieser Versuchsreihe wurde jedoch kein Korb mit Prüflingen in die Kaltbadflüssigkeit eingetaucht. Im ersten Teil der Versuchsreihe wurde während einer Stunde insgesamt 200 l Stickstoffgas durch die Siebplatte (S) von unten in die Kaltbadflüssigkeit (250 ml) bei Raumtemperatur (27 °C) eingeblasen. Danach wurde das Aktivkohlefilter (AK) gewogen. Dessen Gewichtszunahme betrug 23,7 Masse-%.

Dieser Versuch zeigt, daß relativ viel von der Kaltbadflüssigkeit bei Raumtemperatur durch den Stickstoffgasstrom mitgerissen und am Aktivkohlefilter zurückgehalten wird.

Im zweiten Teil dieser Versuchsreihe wurde wie beim ersten Teil der Versuchsreihe während einer Stunde 200 l Stickstoffgas in die gleiche Kaltbadflüssigkeit von unten eingeblasen, zusätzlich aber noch 280 ml flüssiger Stickstoff im Gegenstrom zum austretenden Stickstoffgas von oben durch eine wärmeisolierte Rieselkolonne (R) und anschließend in wärmeisolierten Leitungen in die Kaltbadflüssigkeit eingeleitet. Die Kaltbadflüssigkeit hatte während der gesamten Betriebsdauer eine Temperatur von -65 °C. Am Versuchsende wurde die Gewichtsveränderung des Aktivkohlefilters (AK) bestimmt. Die Gewichtszunahme betrug 0,98 Masse-%.

Dieser Versuch zeigt, daß durch eine Dosierung von 280 ml/Stunde an flüssigem Stickstoff eine Kaltbadtemperatur von -65 °C erreicht und während der gesamten Versuchsdauer aufrechterhalten wurde. Eine zusätzliche indirekte Kühlung war nicht notwendig. Der Versuch zeigt weiter, daß durch die Verwendung einer Rieselkolonne in Kombination mit flüssigem Stickstoff nur eine geringe Menge an Kaltbadflüssigkeit in das Aktivkohlefilter gelangt.

**Beispiel 3**

Der Versuch wurde in einer in Fig. 4 schematisch dargestellten Apparatur mit einem wie in Fig. 2 dargestellten Kaltbad und analog den Versuchsbedingungen von Beispiel 1 durchgeführt. Hierbei wurden zusätzlich von unten durch die Siebplatte (S) 200 1/Stunde Stickstoffgas (2) und im Gegenstrom 280 ml/Stunde flüssiger Stickstoff von oben über die Rieselkolonne (R) in die Kaltbadflüssigkeit (250 ml) eingeleitet. Während der gesamten Versuchsdauer wurde jeweils eine konstante Temperatur von +250 °C im Heißbad und von -65 °C im Kaltbad gehalten. Am Versuchsende wurde die Gewichtszunahme des Aktivkohlefilters (AK) und die Zusammensetzung des Heiß- und Kältebades sowie des Kondensats im Sammelbehälter der Kältefalle (C) gaschromatographisch analysiert.

Es wurden folgende Zusammensetzungen gefunden:

im Heißbad 97,0 Flächen-% der Heißbadflüssigkeit
3,0 Flächen-% der Kaltbadflüssigkeit
im Kaltbad 100,0 Flächen-% der Kaltbadflüssigkeit
im Kondensat des Sammelbehälters der Kältefalle
99,9 Flächen-% der Kaltbadflüssigkeit
0,1 Flächen-% der Heißbadflüssigkeit
Gewichtszunahme des Aktivkohlefilters
78,8 Masse-% (Mittelwert/Std: 1,1 Masse-%)

**Beispiel 4**

Der Versuch wurde in einer in Fig. 3 dargestellten Apparatur durchgeführt und untersucht den Einfluß einer Querschnittsverengung der Rohrschlaufe durch einen kreiszylindrischen Gitterverband in Abhängigkeit von der Umwälzleistung des Propellerrührers und von der Viskosität der Badflüssigkeit. Für den Versuch wurde eine Apparatur nach Fig. 3 mit den in der Beschreibung angegebenen Geräteparametern verwendet. Der kreiszylindrische Gitterverband aus PMMA (P), der bei diesem Versuch den Korb mit den Prüflingen ersetzte, hatte einen Durchmesser von 85 mm, eine Höhe von 80 mm und eine quadratische Durchtrittsweite von 6x6 $mm^2$. Die Stegbreite des Gitters war 3 mm. Nach Einführen des Gitterverbandes in den Rohrschenkel mit der verschließbaren Öffnung (K) wurde der zwischen Rohr und Gitterverband verbleibende

Ringspalt (Sp) durch einen Stahlring verschlossen. Der gesamte Umwälzstrom der Badflüssigkeit konnte daher nur durch den Gitterverband (P) fließen. Die Geschwindigkeit des Umwälzstromes wurde durch einen 3-flügeligen Propellerrührer mit einer Blattneigung von 25° nach Art eines Schiffspropellers, welcher durch einen Elektromotor angetrieben wurde, reguliert. Gemessen wurde der Flüssigkeitsdurchsatz V in Abhängigkeit von der spezifischen Leistung $P_V$ des Propellerrührers für zwei Badflüssigkeiten mit unterschiedlicher Viskosität. In der ersten Versuchsreihe wurde Wasser als Badflüssigkeit verwendet ($\eta$ = 1 mPa•s; 20° C) und in der zweiten Versuchsreihe eine 72%ige Glycerin-Wasser-Lösung ( = 26 mPa•s; 20° C). Die dynamische Flüssigkeitsviskosität wurde nach der Kugelfallmethode mit einem Höppler-Viskosimeter gemessen. Der Flüssigkeitsdurchsatz V wurde bei beiden Versuchsreihen sowohl in Anwesenheit, als auch in Abwesenheit des Gitterverbands und des Stahlringes gemessen.

1. Versuchsreihe mit Wasser als Badflüssigkeit (1 mPa•s)

| | $P_V$ [kW/m³] | V [m³/h] |
|---|---|---|
| ohne Gitterverband | 0,1 | 13,2 |
| " | 1,0 | 29,1 |
| mit Gitterverband | 0,1 | 9,1 |
| " | 1,0 | 17,0 |

2. Versuchsreihe mit 72%iger Glycerinlösung (26 mPa•s)

| | $P_V$ [kW/m³] | V [m³/h] |
|---|---|---|
| ohne Gitterverband | 0,1 | 7,2 |
| " | 1,0 | 21,0 |
| mit Gitterverband | 0,1 | 3,4 |
| " | 1,0 | 10,5 |

Erwartungsgemäß ist ohne Gitterverband und mit niedriger Viskosität der Durchsatz der Badflüssigkeit höher als mit Gitterverband und hoher Viskosität.

Durch die Reduktion des Querschnitts der Rohrschlaufe an der Stelle, wo der Gitterverband mit dem Abdeckring positioniert ist, erhöht sich die Geschwindigkeit der Badflüssigkeit lokal. So stieg die lokale Geschwindigkeit von 0,20 m/s (ohne Gitterverband) auf 1,25 m/s (mit Gitterverband und Abdeckring) bei einem Durchsatz von 14 m³/h. Die Verweilzeit der Badflüssigkeit in dem Gitterverband betrug bei einem Durchsatz von 15 m³/h 0,1 s.

## Patentansprüche

**1.** Verfahren zur Prüfung von Gegenständen durch Thermoschock in einer geschlossenen Apparatur, bestehend aus folgenden, vorzugsweise sich wiederholenden Schritten:

a) Einführen des zu prüfenden Gegenstandes in die Apparatur,
b) Abkühlen des Gegenstandes durch Eintauchen in ein flüssiges Kaltbad,
c) Trocknung des Gegenstandes über mindestens einer Kältefalle oder in mindestens einem

Trockenraum

d) Erhitzen des Gegenstandes durch Eintauchen in ein flüssiges Heißbad,

e) Trocknen des Gegenstandes über mindestens einer Kältefalle oder in mindestens einem Trockenraum,

wobei der Temperaturunterschied zwischen Heiß- und Kaltbad 50 bis 500 °C beträgt, die Temperatur der Kältefalle 5-30 °C niedriger ist als die Temperatur des Kältebades und die Temperatur des Trockenraums 10 bis 50 °C höher ist als die Temperatur des Heißbades, und wobei die Schritte b) bis e) in voneinander abgetrennten, durch verschließbare Öffnungen miteinander verbundenen Teilen der Apparatur durchgeführt werden.

**2.** Verfahren zur Prüfung von Gegenständen durch Thermoschock in einer geschlossenen Apparatur, bestehend aus folgenden, vorzugsweise sich wiederholenden Schritten:

a) Einführen des zu prüfenden Gegenstandes in die Apparatur,

b) Erhitzen des Gegenstandes durch Eintauchen in ein flüssiges Heißbad,

c) Trocknen des Gegenstandes über mindestens einer Kältefalle oder in mindestens einem Trockenraum,

d) Abkühlen des Gegenstandes durch Eintauchen in ein flüssiges Kaltbad,

e) Trocknung des Gegenstandes über mindestens einer Kältefalle oder in mindestens einem Trockenraum

wobei der Temperaturunterschied zwischen Heiß- und Kaltbad 50 bis 500 °C beträgt, die Temperatur der Kältefalle 5-30 °C niedriger ist als die Temperatur des Kältebades und die Temperatur des Trockenraums 10 bis 50 °C höher ist als die Temperatur des Heißbades, und wobei die Schritte b) bis e) in voneinander abgetrennten, durch verschließbare Öffnungen miteinander verbundenen Teilen der Apparatur durchgeführt werden.

**3.** Verfahren nach einem der Ansprüche 1 oder 2, dadurch gekennzeichnet, daß in die Kaltbadflüssigkeit gasförmiger und/oder flüssiger Stickstoff eingeleitet wird.

**4.** Verfahren nach einem der Ansprüche 1 oder 2, dadurch gekennzeichnet, daß die Schritte c) und e) entfallen und in die Kaltbadflüssigkeit gasförmiger und/oder flüssiger Stickstoff eingeleitet wird.

**5.** Verfahren nach mindestens einem der Ansprüche 1 bis 4, dadurch gekennzeichnet, daß durch Einleiten von Stickstoffgas Wasserdampf aus der Apparatur verdrängt wird.

**6.** Verfahren nach mindestens einem der Ansprüche 3 bis 5, dadurch gekennzeichnet, daß der gasförmige Stickstoff direkt und der flüssige Stickstoff im Gegenstrom zum gasförmigen Stickstoff über eine Rieselkolonne in die Kaltbadflüssigkeit eingeleitet wird.

**7.** Verfahren nach mindestens einem der Ansprüche 3, 4 oder 6, dadurch gekennzeichnet, daß die Temperatur des Kaltbades über die Dosierung von flüssigem Stickstoff gesteuert wird.

**8.** Verfahren nach mindestens einem der Ansprüche 1 bis 7, dadurch gekennzeichnet, daß mindestens eines der beiden Badgefäße aus einer Rohrschlaufe mit einer oben angebrachten verschließbaren Öffnung besteht, in der Rohrschleife eine Rührvorrichtung angebracht ist und der zu prüfende Gegenstand in die Rohrschlaufe eingeführt wird.

**9.** Verfahren nach einem der Ansprüche 1 oder 2, dadurch gekennzeichnet, daß die Schritte c) und e) entfallen und mindestens eines der beiden Badgefäße aus einer Rohrschlaufe mit einer oben angebrachten verschließbaren Öffnung besteht, in der Rohrschleife eine Rührvorrichtung angebracht ist und der zu prüfende Gegenstand in die Rohrschlaufe eingeführt wird.

**10.** Verfahren nach mindestens einem der Ansprüche 1 bis 9, dadurch gekennzeichnet, daß die Apparatur mindestens einen Trockenraum besitzt und der zu prüfende Gegenstand über einen Trockenraum in die Apparatur eingeführt wird.

**11.** Verfahren nach mindestens einem der Ansprüche 1 bis 10, dadurch gekennzeichnet, daß der Temperaturunterschied zwischen Heiß- und Kaltbad 100 bis 350 ° C beträgt.

**12.** Verfahren nach mindestens einem der Ansprüche 1 bis 11, dadurch gekennzeichnet, daß der Temperaturunterschied zwischen Heiß- und Kaltbad 150 bis 250 ° C beträgt.

**13.** Verfahren nach mindestens einem der Ansprüche 1 bis 12, dadurch gekennzeichnet, daß die Apparatur mindestens eine Kältefalle besitzt und deren Temperatur 5 bis 50 ° C niedriger ist als die Temperatur des vorhergehenden Bades.

**14.** Verfahren nach mindestens einem der Ansprüche 1 bis 14, dadurch gekennzeichnet, daß die Apparatur mindestens einen Trockenraum besitzt und die Temperatur des Trockenraums 10 bis 20 ° C höher ist als die Siedetemperatur des vorhergehenden Bades.

**15.** Verfahren nach mindestens einem der Ansprüche 1 bis 12, dadurch gekennzeichnet, daß als Kaltbadflüssigkeiten geradkettige oder verzweigte Perfluoralkane der Formel $C_iF_{2i+2}$, wobei i eine ganze Zahl von 5 bis 20 ist oder Perfluorpolyether der Formel (I)

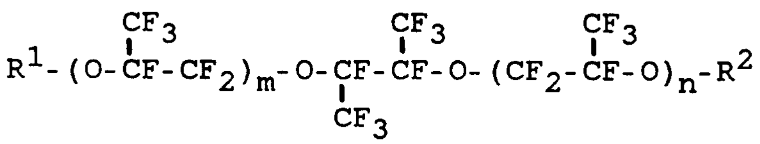

(I)

worin bedeuten:

- $R^1$, $R^2$ gleich oder voneinander verschieden F oder $C_aF_{2a+1}$, wobei a eine ganze Zahl von 1 bis 10 ist, und
- m, n ganze Zahlen von O bis 12, mit $1 \leqq n+m \leqq 15$

oder Perfluorpolyether der Formel (II)

$R^3$-O-(A)-(B)-(C)-$R^4$ (II),

worin bedeuten:

- $R^3$, $R^4$ gleich oder voneinander verschieden $C_bF_{2b+1}$, wobei b eine ganze Zahl von 1 bis 4 ist,

(A), (B) und (C) verschieden voneinander eine Gruppe der Formel

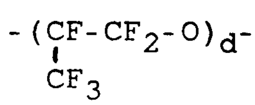 , 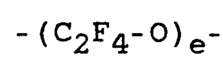

oder

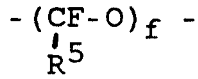

mit

- $R^5$ = F oder $CF_3$,
- d eine ganze Zahl von 1 bis 7 und
- e, f gleich oder voneinander verschieden eine ganze Zahl von 0 bis 7

eingesetzt werden.

**16.** Verfahren nach mindestens einem der Ansprüche 1 bis 15, dadurch gekennzeichnet, daß als Heißbadflüssigkeiten cyclische oder substituierte cyclische Perfluoralkane mit einer Kohlenstoffzahl von 10 bis 20 oder Perfluorpolyether der Formel (I)

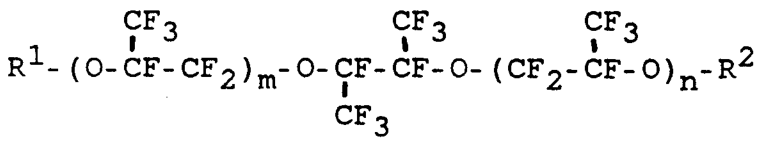 (I)

worin bedeuten:

$R^1$, $R^2$ gleich oder voneinander verschieden F oder $C_aF_{2a+1}$, wobei a eine ganze Zahl von 1 bis 10 ist, und

m, n ganze Zahlen von O bis 12, mit $1 \leqq n+m \leqq 15$

oder

Perfluorpolyether der Formel (II)

$R^3$-O-(A)-(B)-(C)-$R^4$ (II),

worin bedeuten:

$R^3$, $R^4$ gleich oder voneinander verschieden $C_bF_{2b+1}$, wobei b eine ganze Zahl von 1 bis 4 ist,

(A), (B) und (C) verschieden voneinander eine Gruppe der Formel

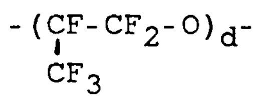 , $-(C_2F_4-O)_e-$

oder

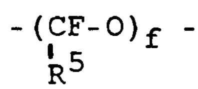

mit

$R^5$ = F oder $CF_3$,

d eine ganze Zahl von 1 bis 7 und

e, f gleich oder voneinander verschieden eine ganze Zahl von 0 bis 7

oder

perfluorierte Amine der Formel

$R^6R^7R^8N$,

worin $R^6$ bis $R^8$ gleich oder voneinander verschieden eine Gruppe der Formel $C_gF_{2g+1}$, wobei g eine ganze Zahl von 1 bis 14 ist oder

Perfluoraminoether der Formel

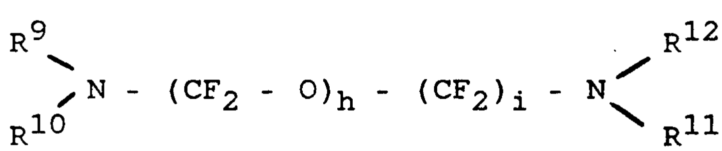

worin bedeuten:

$R^9$ bis $R^{12}$ gleich oder voneinander verschieden eine Gruppe der Formel $C_gF_{2g+1}$, wobei g eine ganze Zahl von 1 bis 14 ist,

h, i gleich oder voneinander verschieden eine ganze Zahl von 1 bis 6

eingesetzt werden.

**17.** Verfahren nach mindestens einem der Ansprüche 1 bis 14, dadurch gekennzeichnet, daß sowohl als Kaltbadflüssigkeit, als auch als Heißbadflüssigkeit

Perfluorpolyether der Formel (I)

$$R^1-(O-\overset{CF_3}{\overset{|}{C}F}-CF_2)_m-O-\underset{\underset{CF_3}{|}}{CF}-\overset{CF_3}{\overset{|}{C}F}-O-(CF_2-\overset{CF_3}{\overset{|}{C}F}-O)_n-R^2 \qquad (I)$$

worin bedeuten:

$R^1$, $R^2$ gleich oder voneinander verschieden F oder $C_aF_{2a+1}$, wobei a eine ganze Zahl von 1 bis 10 ist, und

m, n eine ganze Zahl von 0 bis12, mit $1 \leqq n+m \leqq 15$

oder

Perfluorpolyether der Formel (II)

$R^3$-O-(A)-(B)-(C)-$R^4$ (II),

worin bedeuten:

$R^3$, $R^4$ gleich oder voneinander verschieden $C_bF_{2b+1}$, wobei b eine ganze Zahl von 1 bis 4 ist,

(A), (B) und (C) verschieden voneinander eine Gruppe der Formel

$$-(\underset{\underset{CF_3}{|}}{CF}-CF_2-O)_d- \quad , \quad -(C_2F_4-O)_e-$$

oder

$$-(\underset{\underset{R^5}{|}}{CF}-O)_f-$$

mit

$R^5$ = F oder $CF_3$,

d eine ganze Zahl von 1 bis 7 und

e, f gleich oder voneinander verschieden eine ganze Zahl von 0 bis 7

eingesetzt werden.

**18.** Verfahren nach mindestens einem der Ansprüche 1 bis 17, dadurch gekennzeichnet, daß die in die Kältefalle mitgeschleppte Kaltbadflüssigkeit dort gesammelt und dann in das Kaltbad zurückgeführt wird.

**19.** Verfahren nach mindestens einem der Ansprüche 1 bis 18, dadurch gekennzeichnet, daß die in die Trockenkammer mitgeschleppte und dort verdampfte Heißbadflüssigkeit kondensiert und in das Heißbad zurückgeführt wird.

**20.** Verfahren nach mindestens einem der Ansprüche 1 bis 19, dadurch gekennzeichnet, daß zwei Gegenstände gleichzeitig geprüft werden, wobei sich alternierend der eine Gegenstand im Heißbad und der andere Gegenstand im Kaltbad befindet.

**21.** Vorrichtung zur Prüfung von Gegenständen durch Thermoschock in einer geschlossenen Apparatur,

bestehend aus einem 1. Raum mit einem Kaltbad und einer Vorrichtung zu dessen Kühlung,
einem 2. Raum mit einem Heißbad und einer Vorrichtung zu dessen Heizung,
einem Wärmetauscher-Bereich, enthaltend mindestens einen mit einer Heizvorrichtung versehenen Trockenraum und/oder mindestens einen mit einer Kältefalle und einer Kühlvorrichtung für diese versehenen Raum, wobei der 1. Raum und der 2. Raum über den Wärmetauscher-Bereich mittels verschließbarer Öffnungen verbunden sind
und einer Vorrichtung zum Transport der zu prüfenden Gegenstände vom 1. Raum über den Wärmetauscher-Bereich zum 2. Raum oder in umgekehrter Richtung einschließlich einer oder mehrerer verschließbarer Öffnungen an der Außenwand der Apparatur zum Be- und Entladen der Transportvorrichtung mit den zu prüfenden Gegenständen.

**22.** Vorrichtung nach Anspruch 21, dadurch gekennzeichnet, daß die Apparatur mindestens eine Kältefalle besitzt und zur Kühlung des Kaltbades und der Kältefalle eine zweistufige Kompressionskälteanlage verwendet wird, wobei das Kaltbad mit der ersten Verdampferstufe und die Kältefalle mit der zweiten Verdampferstufe gekühlt wird.

**23.** Vorrichtung nach Anspruch 21, dadurch gekennzeichnet, daß das Kaltbadgefäß oben offen ist und mit einem doppelten Boden versehen ist, dessen oberer Boden eine Siebplatte darstellt, und zwischen oberem und unterem Boden an dem Gefäß eine Zuleitung angebracht sind.

**24.** Vorrichtung nach mindestens einem der Ansprüche 21 bis 23, dadurch gekennzeichnet, daß mindestens eines der beiden Badgefäße aus einer Rohrschlaufe mit einer oben angebrachten verschließbaren Öffnung besteht und in der Rohrschlaufe eine Rührvorrichtung angebracht ist.

**25.** Vorrichtung nach Anspruch 24, dadurch gekennzeichnet, daß man zur Beschickung der Rohrschlaufe mit den zu prüfenden Gegenständen einen kreiszylindrischen Korb verwendet und den Spalt zwischen Korb und Rohrschlaufenwand mit einem Dichtungsring abdeckt.

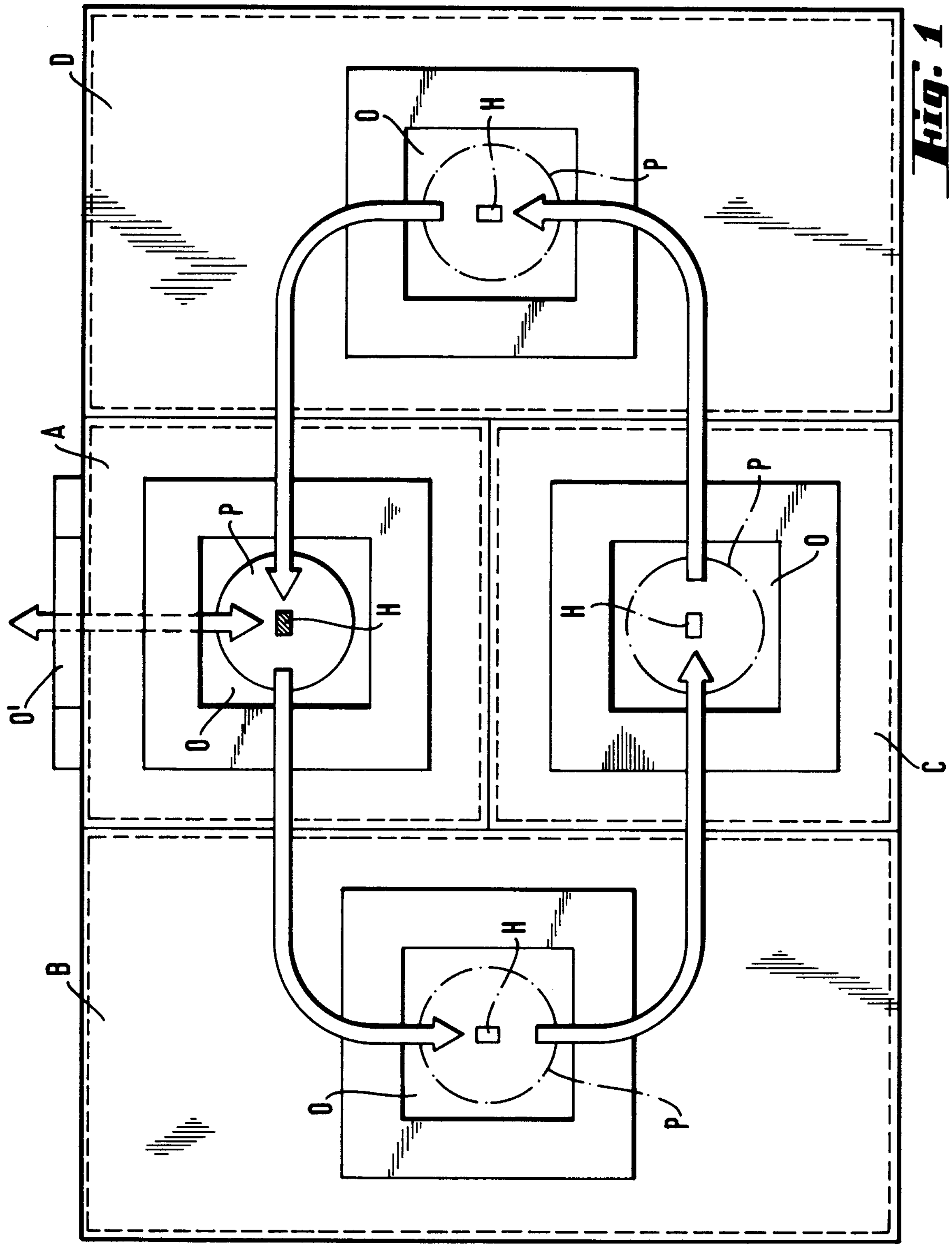


Fig. 1

Fig. 2

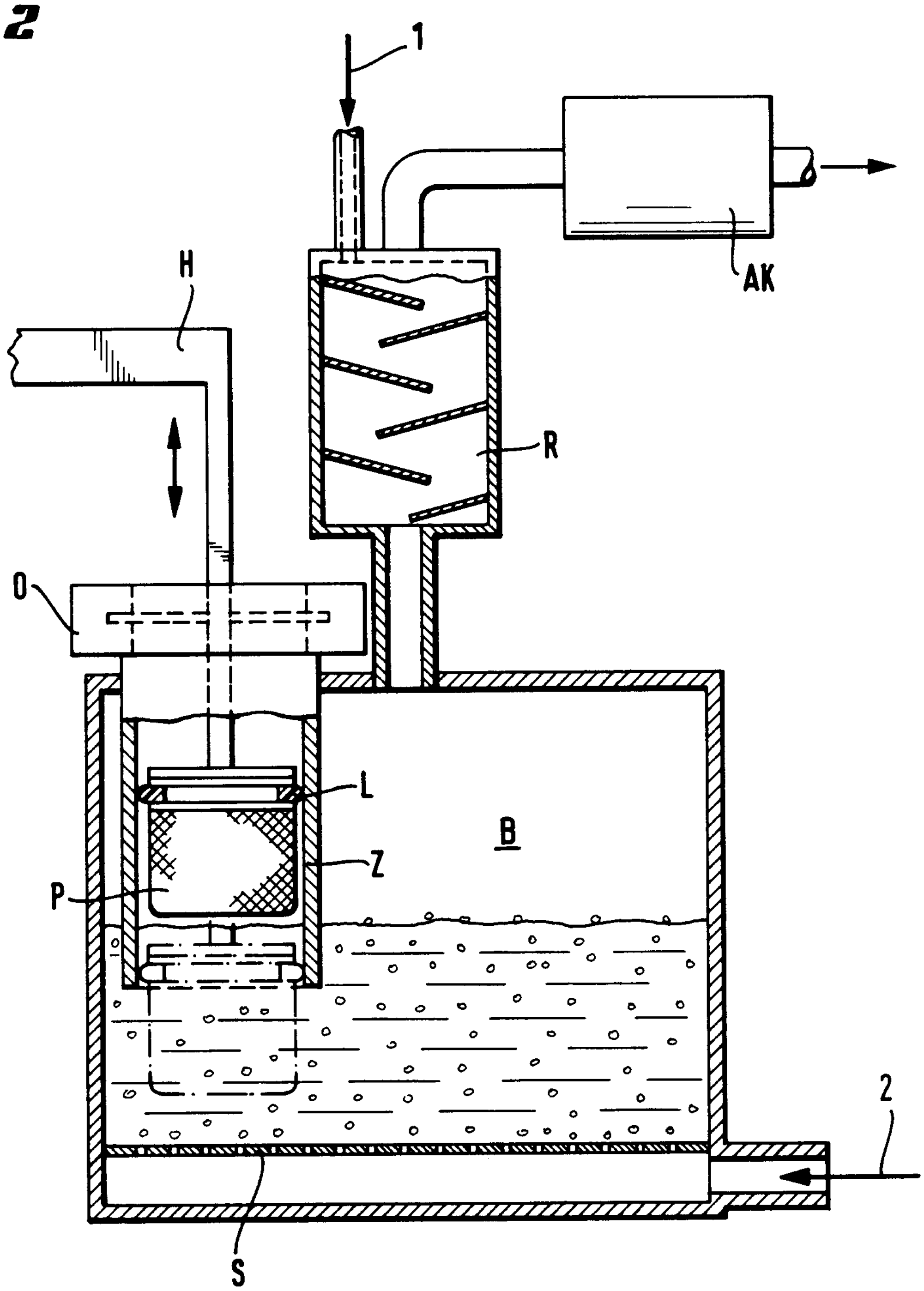

Fig. 3

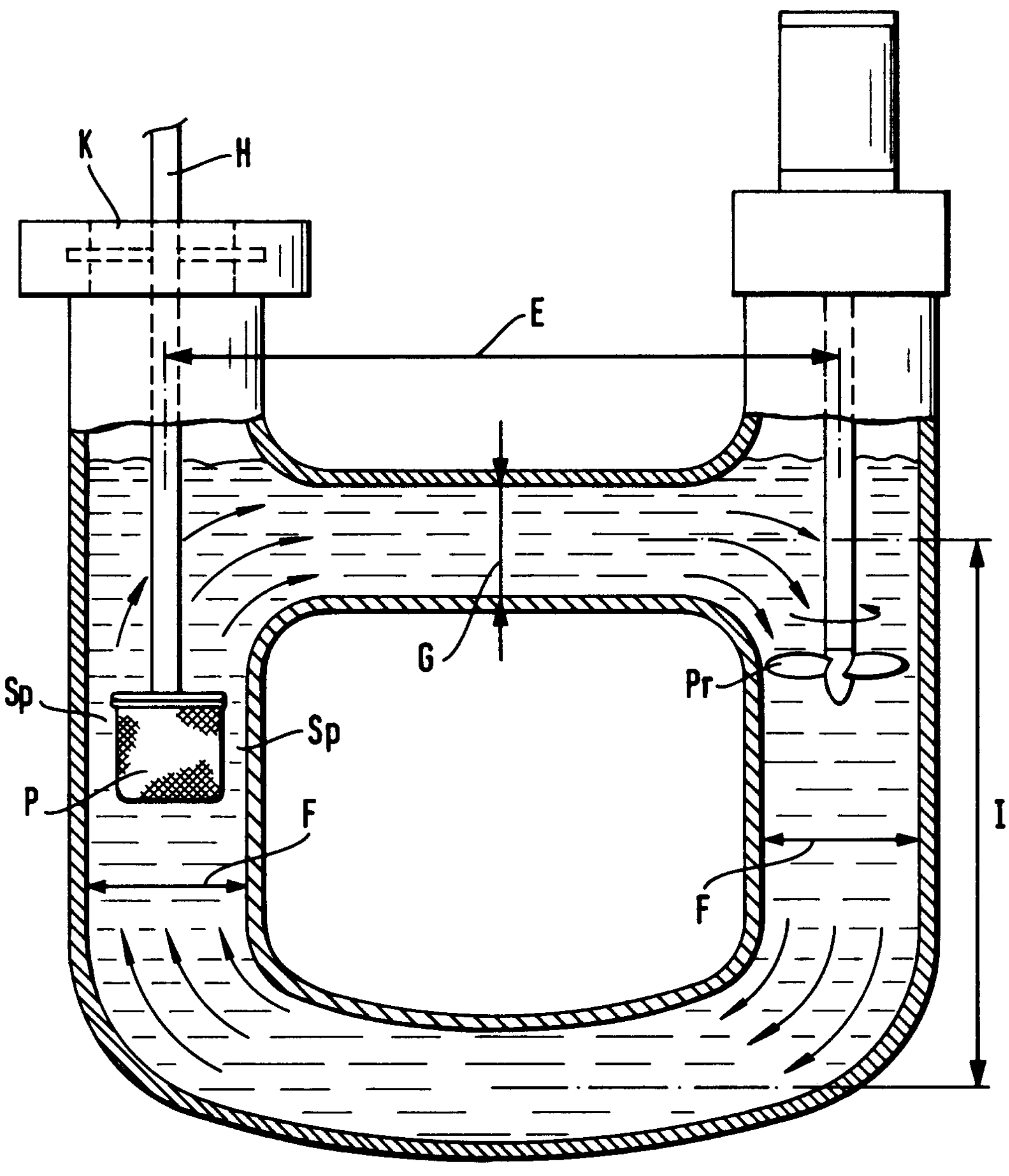

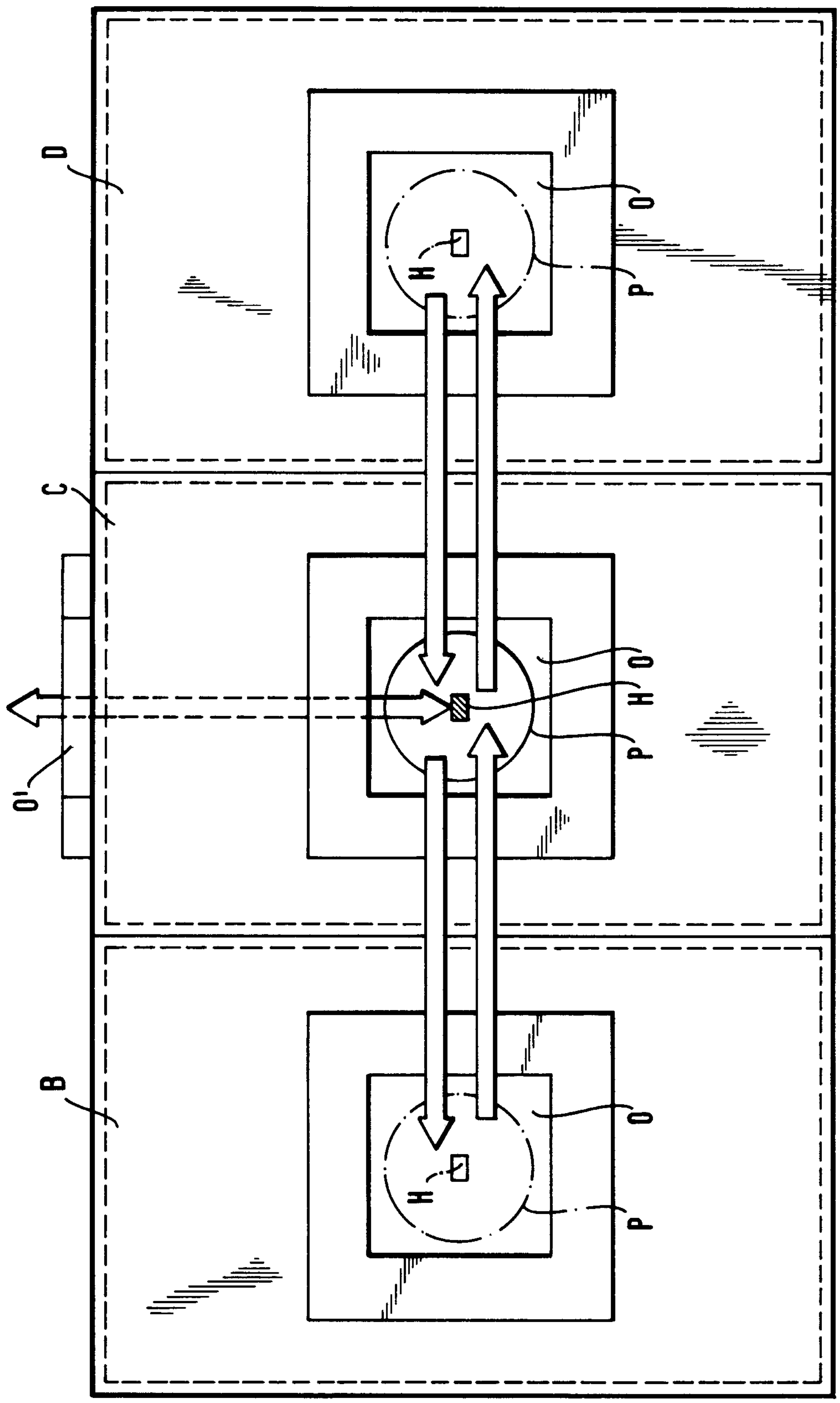


Fig. 4